(19) Europäisches Patentamt / European Patent Office / Office européen des brevets

(11) **EP 2 510 568 B1**

(12) **EUROPEAN PATENT SPECIFICATION**

(45) Date of publication and mention
of the grant of the patent:
**14.09.2016 Bulletin 2016/37**

(51) Int Cl.:
*H01M 10/36* (2006.01)          *H01M 8/18* (2006.01)
*H01M 8/20* (2006.01)          *H01M 2/40* (2006.01)

(21) Application number: **10836850.7**

(22) Date of filing: **17.12.2010**

(86) International application number:
**PCT/AU2010/001698**

(87) International publication number:
**WO 2011/072339 (23.06.2011 Gazette 2011/25)**

(54) **FLOWING ELECTROLYTE RESERVOIR SYSTEM**

FLIESSENDES ELEKTROLYTRESERVOIRSYSTEM

SYSTÈME DE RÉSERVOIR POUR ÉLECTROLYTE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2009  AU 2009906174**

(43) Date of publication of application:
**17.10.2012 Bulletin 2012/42**

(73) Proprietor: **RedFlow R&D Pty Ltd
Seventeen Mile Rocks, QLD 4073 (AU)**

(72) Inventor: **WINTER, Alexander Rudolf
Seventeen Mile Rocks
Queensland 4073 (AU)**

(74) Representative: **Ruuskanen, Juha-Pekka
Page White & Farrer
Bedford House
John Street
London WC1N 2BF (GB)**

(56) References cited:
**US-A- 4 400 448      US-A- 4 418 128
US-A- 5 196 276      US-B1- 6 242 125
US-B2- 6 864 012**

- **PATENT ABSTRACTS OF JAPAN & JP 63 016573
A (AGENCY OF IND SCIENCE & TECHNOL ET AL)
23 January 1988**
- **PATENT ABSTRACTS OF JAPAN & JP 62 229665
A (SUMITOMO ELECTRIC IND LTD) 08 October
1987**
- **PATENT ABSTRACTS OF JAPAN & JP 63 058771
A (AGENCY OF IND SCIENCE & TECHNOL ET AL)
14 March 1988**

**Description**

FIELD OF THE INVENTION

The present invention relates to flowing electrolyte batteries. In particular, although not exclusively, the invention relates to a flowing electrolyte reservoir system having a tank within a tank.

BACKGROUND TO THE INVENTION

Batteries used in stand alone power supply systems are commonly lead-acid batteries. However, lead-acid batteries have limitations in terms of performance and environmental safety. For example, typical lead-acid batteries often have very short lifetimes in hot climate conditions, especially when they are occasionally fully discharged. Lead-acid batteries are also environmentally hazardous, since lead is a major component of lead-acid batteries and can cause serious environmental problems during manufacturing and disposal.

Flowing electrolyte batteries, such as zinc-bromine batteries, zinc-chlorine batteries, and vanadium flow batteries, offer a potential to overcome the above mentioned limitations of lead-acid batteries. In particular, the useful lifetime of flowing electrolyte batteries is not affected by deep discharge applications, and the energy to weight ratio of flowing electrolyte batteries is up to six times higher than that of lead-acid batteries.

A flowing electrolyte battery, like a lead acid battery, comprises a stack of cells that produce a total voltage higher than that of individual cells. But unlike a lead acid battery, cells in a flowing electrolyte battery are hydraulically connected through an electrolyte circulation path.

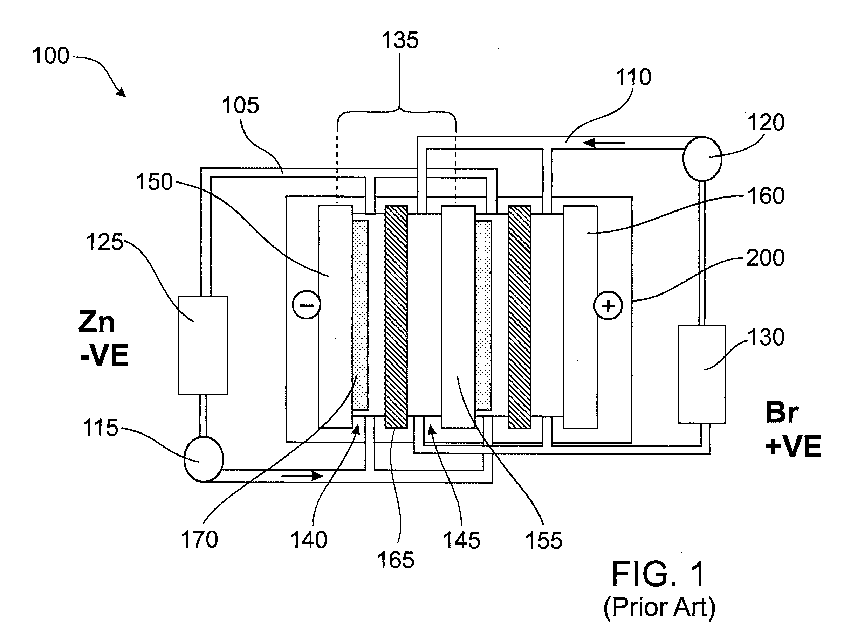

Referring to FIG. 1, a flow diagram illustrates a basic zinc-bromine flowing electrolyte battery 100, as known according to the prior art. The zinc-bromine battery 100 includes a negative electrolyte circulation path 105 and an independent positive electrolyte circulation path 110. The negative electrolyte circulation path 105 contains zinc ions as an active chemical, and the positive electrolyte circulation path 110 contains bromine ions as an active chemical. The zinc-bromine battery 100 also comprises a negative electrolyte pump 115, a positive electrolyte pump 120, a negative zinc electrolyte (anolyte) tank 125, and a positive bromine electrolyte (catholyte) tank 130. A complexing agent is generally added to the bromine electrolyte to form a polybromide complex that reduces the reactivity and vapour pressure of elemental bromine.

To obtain high voltage, the zinc-bromine battery 100 further comprises a stack of cells connected in a bipolar arrangement. For example, a cell 135 comprises half cells 140, 145 including a bipolar electrode plate 155 and a micro porous separator plate 165. The zinc-bromine battery 100 then has a positive polarity end at a collector electrode plate 160, and a negative polarity end at another collector electrode plate 150.

A chemical reaction in a positive half cell, such as the half cell 145, during charging can be described according to the following equation:

$$2Br^- \;\rightarrow\; Br_2 + 2e^- \qquad\qquad\qquad \text{Eq. 1}$$

Bromine is thus formed in half cells in hydraulic communication with the positive electrolyte circulation path 110 and is then stored in the positive bromine electrolyte tank 130. A chemical reaction in a negative half cell, such as the half cell 140, during charging can be described according to the following equation:

$$Zn^{2+} + 2e^- \;\rightarrow\; Zn \qquad\qquad\qquad \text{Eq. 2}$$

A metallic zinc layer 170 is thus formed on the collector electrode plate 150 in contact with the negative electrolyte circulation path 105. Chemical reactions in the half cells 140, 145 during discharging are then the reverse of Eq. 1 and Eq. 2.

The prior art discloses various approaches for packaging flowing electrolyte battery systems, including various standard sizes and positions of the electrolyte storage tanks. Generally, two independent tanks, one for an anolyte and one for a catholyte, are arranged adjacent to each other and to a battery cell stack. Appropriate "plumbing", including pumps and hoses, is then used to circulate the electrolytes from the storage tanks, through the cell stack, and back to the storage tanks. However, such conventional shapes and arrangements of electrolyte storage tanks can cause numerous problems, including safety concerns related to leaking electrolyte, excessive plumbing costs, wasted materials, high manufacturing costs, and over-sized systems.

US 4,418,128 A (Fujii Toshinobu [JP]) 29 November 1983 (1983-11-29) discloses an electrolyte circulation type metal-bromine secondary battery of the kind in which the negatively active material is a metal and the anode electrolyte storage tank comprises an anode electrolyte zone and a complexing agent zone having a cross-sectional area smaller than that of the anode electrolyte zone.

US 4,400,448 A (Einstein Harry [US] et al) 23 August 1983 (1983-08-23) discloses an electrochemical cell construction featuring a co-extruded plastic electrode in an interleaved construction with an integral separator-spacer. Also featured is a leak and impact resistant construction for preventing the spill of corrosive materials in the event of rupture.

Patent Abstracts of Japan & JP 63, 016573, A, (Agency of Ind Science & Technol et al), 23 January 1988 (1988-01-23) discloses a tank for a negative solution that is housed in a tank for a positive solution. Even if the inside tank breaks to cause leakage, the negative solution leaks out only into the outer tank.

There is therefore a need to overcome or alleviate many of the above discussed problems associated with flowing electrolyte batteries of the prior art.

OBJECT OF THE INVENTION

Therefore, an object of the present invention is to overcome or alleviate one or more limitations of the prior art including providing improved flowing electrolyte reservoir systems for circulating electrolyte through a battery cell stack, to reduce manufacturing costs, increase safety and improve structural robustness of electrolyte tanks, and reduce tank size and weight.

SUMMARY OF THE INVENTION

The present invention is a flowing electrolyte reservoir system for a flowing electrolyte battery according to claim 1. The system comprises:

a battery cell stack comprising a negative electrolyte input port and a negative electrolyte output port;

an outer tank positioned beneath the battery cell stack; and

an inner tank positioned inside the outer tank and beneath the battery cell stack;

wherein the negative electrolyte input port and the negative electrolyte output port of the battery cell stack are positioned directly above the outer tank and are not positioned directly above the inner tank.

Optionally, the inner tank is transversely positioned between opposite corners of the outer tank and beneath opposite corners of the battery cell stack.

Optionally, the system includes a first pump positioned on top of the outer tank and adjacent the battery cell stack and a second pump positioned on top of the inner tank and adjacent the battery cell stack.

Optionally, the outer tank contains zinc electrolyte and the inner tank contains bromine electrolyte.

Optionally, the outer tank and the inner tank are made of rotational moulded plastic.

Optionally, the outer tank and the inner tank share a common lid.

Optionally, the outer tank and the inner tank are complete, separable tanks and the inner tank fits into a void of the outer tank.

Optionally, a raised lip is integral to an edge of the outer tank.

Optionally, a bottom surface of the inner tank is sloped toward an electrolyte collection region.

Optionally, an upper part of the inner and outer tanks form walls of a cavity for a cooling structure.

Optionally, the walls of a cavity for a cooling structure include a hole for mounting a cooling fan.

BRIEF DESCRIPTION OF THE DRAWINGS

To assist in understanding the invention and to enable a person skilled in the art to put the invention into practical effect, preferred embodiments of the invention are described below by way of example only with reference to the accompanying drawings, in which:

FIG. 1 is a diagram illustrating a basic zinc-bromine flowing electrolyte battery, as known according to the prior art;

FIG. 2 is a diagram illustrating a top view of a flowing electrolyte reservoir system of a flowing electrolyte battery, including hidden detail, according to some embodiments of the present invention;

FIG. 3 is a side cross-sectional view of the Section A-A of FIG. 1 illustrating a circulation path of zinc electrolyte in a flowing electrolyte reservoir system, according to some embodiments of the present invention;

FIG. 4 is a side cross-sectional view of the Section B-B of FIG. 1 illustrating a circulation path of bromine electrolyte in a flowing electrolyte reservoir system, according to some embodiments of the present invention.

FIG. 5 is a diagram illustrating a top view of a flowing electrolyte reservoir system 500, according to an embodiment of the present invention.

FIG. 6 is a side cross-sectional view of the Section C-C of FIG. 5 illustrating a circulation path of zinc electrolyte in the flowing electrolyte reservoir system, according to an embodiment of the present invention.

FIG. 7 is a side cross-sectional view of the Section D-D of FIG. 5 illustrating a circulation path of bromine electrolyte in the flowing electrolyte reservoir system, according to an alternative embodiment of the present invention.

FIG. 8 is a front exploded perspective view of the flowing electrolyte reservoir system of FIG. 5 of a flowing electrolyte battery, according to an alternative embodiment of the present invention.

FIG. 9 is a rear exploded perspective view of the flowing electrolyte reservoir system of FIG. 5 of a flowing electrolyte battery, according to an alternative embodiment of the present invention.

FIG. 10 is a front assembled perspective view of the flowing electrolyte reservoir system of FIG. 5 of a flowing electrolyte battery, according to an alternative embodiment of the present invention.

Those skilled in the art will appreciate that minor deviations from the layout of components as illustrated in the drawings will not detract from the proper functioning of the disclosed embodiments of the present invention.

DETAILED DESCRIPTION OF THE INVENTION

Embodiments of the present invention comprise a cell stack for a flowing electrolyte battery. Elements of the invention are illustrated in concise outline form in the drawings, showing only those specific details that are necessary to understanding the embodiments of the present invention, but so as not to clutter the disclosure with excessive detail that will be obvious to those of ordinary skill in the art in light of the present description.

In this patent specification, adjectives such as first and second, left and right, front and back, top and bottom, etc., are used solely to define one element or method step from another element or method step without necessarily requiring a specific relative position or sequence that is described by the adjectives. Words such as "comprises" or "includes" are not used to define an exclusive set of elements or method steps. Rather, such words merely define a minimum set of elements or method steps included in a particular embodiment of the present invention.

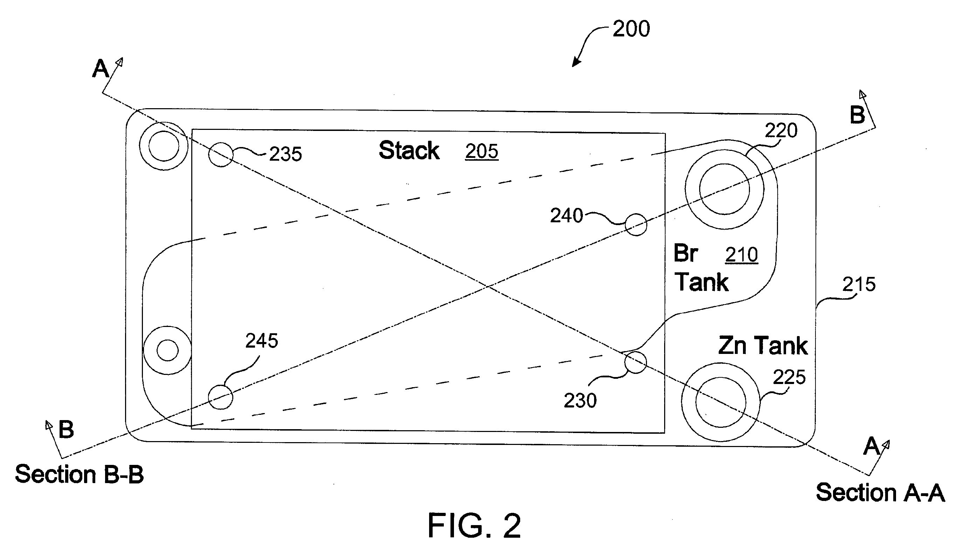

Referring to FIG. 2, a diagram illustrates a top view of a flowing electrolyte reservoir system 200 of a flowing electrolyte battery, including hidden detail, according to some embodiments of the present invention. The system 200 includes a cell stack 205, an inner tank in the form of a bromine electrolyte tank 210, and an outer tank in the form of a zinc electrolyte tank 215. A bromine electrolyte pump 220 is positioned above the bromine electrolyte tank 210, and a zinc electrolyte pump 225 is positioned above the zinc electrolyte tank 215.

A zinc input port 230 enables zinc electrolyte to flow from the zinc electrolyte tank 215 to the cell stack 205, and a zinc output port 235 enables zinc electrolyte to flow from the cell stack 205 to the zinc electrolyte tank 215. Similarly, a bromine input port 240 enables bromine electrolyte to flow from the bromine electrolyte tank 210 to the cell stack 205, and a bromine output port 245 enables bromine electrolyte to flow from the cell stack 205 to the bromine electrolyte tank 210.

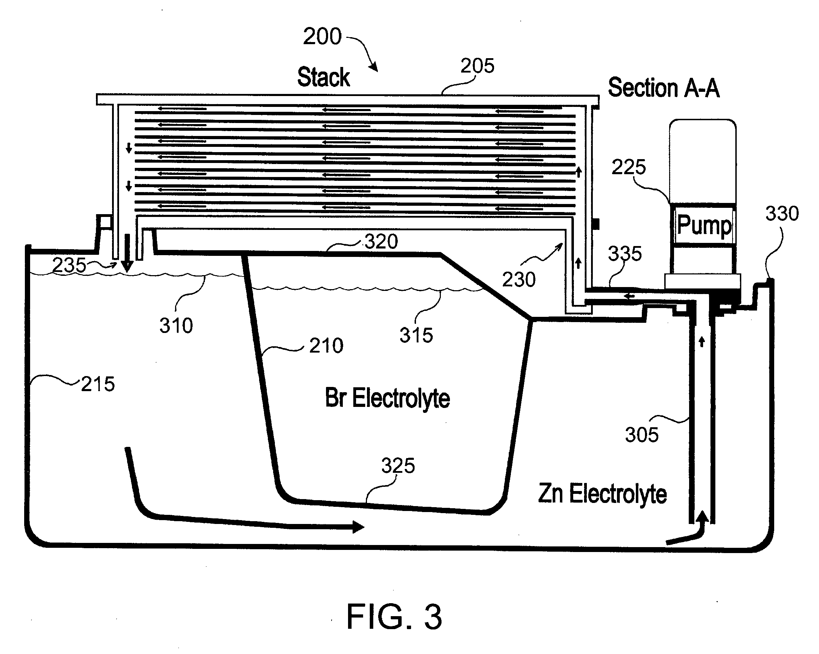

Referring to FIG. 3, a side cross-sectional view of the Section A-A of FIG. 1 illustrates a circulation path of zinc electrolyte in the flowing electrolyte reservoir system 200, according to some embodiments of the present invention. As shown, zinc electrolyte near the bottom of the zinc electrolyte tank 215 enters an intake tube 305 and is then pumped by the zinc electrolyte pump 225 to the zinc input port 230. As shown by the arrows, the zinc electrolyte then flows through the cell stack 205 between various electrode plates, and out the zinc output port 235 to return to the zinc electrolyte tank 215.

Both the bromine electrolyte tank 210 and the zinc electrolyte tank 215 share a common lid 320. Further, a bottom surface 325 the bromine electrolyte tank 210 can be sloped relative to a bottom surface of the flowing electrolyte reservoir system 200 to improve collection and handling of the bromine complex.

Lines 310, 315 indicate liquid levels of the zinc electrolyte and the bromine electrolyte, respectively. As shown, the zinc electrolyte input port 230 and the zinc electrolyte output port 235 of the battery cell stack 205 are directly above the zinc electrolyte tank 215 and are not directly above the bromine electrolyte tank 210. That enables the zinc electrolyte to flow directly from the zinc electrolyte tank 215 to and from the battery cell stack 205 with only minimal "plumbing" apparatus such as hoses and fittings. Furthermore, any leaks in such plumbing are more likely to be self-contained and not result in cross contamination of electrolyte between the zinc electrolyte tank 215 and the bromine electrolyte tank 210.

Also, a raised lip 330 along edges of the zinc electrolyte tank 215 enables potential leaks from the cell stack 205, the pumps 220, 225, and other plumbing hoses 335 to be effectively collected and retained on the top of the lid 320. That can eliminate the need for additional containment trays under both the bromine electrolyte tank 210 and the zinc electrolyte tank 215.

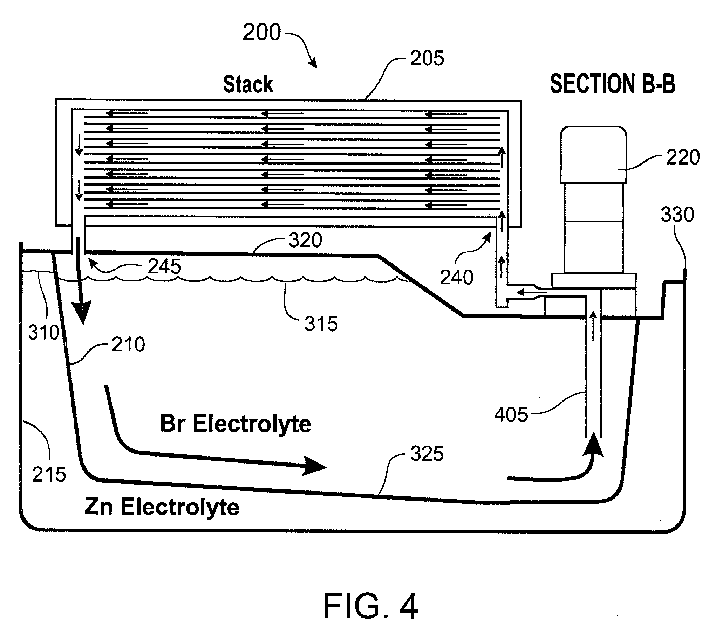

Referring to FIG. 4, a side cross-sectional view of the Section B-B of FIG. 1 illustrates a circulation path of bromine electrolyte in the flowing electrolyte reservoir system 200, according to some embodiments of the present invention. As shown, bromine electrolyte near the bottom of the bromine electrolyte tank 210 enters an intake tube 405 and is then pumped by the bromine electrolyte pump 220 to the bromine input port 240. As shown by the arrows, the bromine electrolyte then flows through the cell stack 205 between various electrode plates, and out the bromine output port 245 to return to the bromine electrolyte tank 210.

As shown in FIG. 2, electrolyte generally flows transversely through the battery cell stack 205, such as zinc electrolyte entering at port 230 and exiting at port 235, and bromine electrolyte entering at port 240 and exiting at port 245. By locating the bromine electrolyte tank 210 diagonally with respect to the battery cell stack 205, the bromine electrolyte return via the port 245 coincides with the bromine electrolyte tank 210 directly below; similarly, the zinc electrolyte return via the port 235 coincides with the zinc electrolyte tank 215 directly below. Thus no additional plumbing is necessary to transfer electrolyte back from the battery cell stack 205 to either the bromine electrolyte tank 210 or to the zinc electrolyte tank 215.

Also, it is known that generally the bromine complex of bromine electrolyte is significantly more chemically active than the zinc electrolyte. By positioning the bromine electrolyte tank 210 inside of the zinc electrolyte tank 215, a risk of leakage of the bromine electrolyte outside of the system 200 is reduced, as the bromine electrolyte is effectively retained within a double-walled container.

Those skilled in the art will appreciate that there are various techniques for manufacturing the flowing electrolyte reservoir system 200. For example, rotational moulding can be used to simultaneously and integrally form both the bromine electrolyte tank 210 and the zinc electrolyte tank 215. Thus only a single weld for securing the lid 320 can be used to complete the electrolyte enclosures of the system 200. Further, the tank-in-tank structure of the present invention provides improved overall stiffness of the tank walls, which permits the use of thinner wall thicknesses and less total weight.

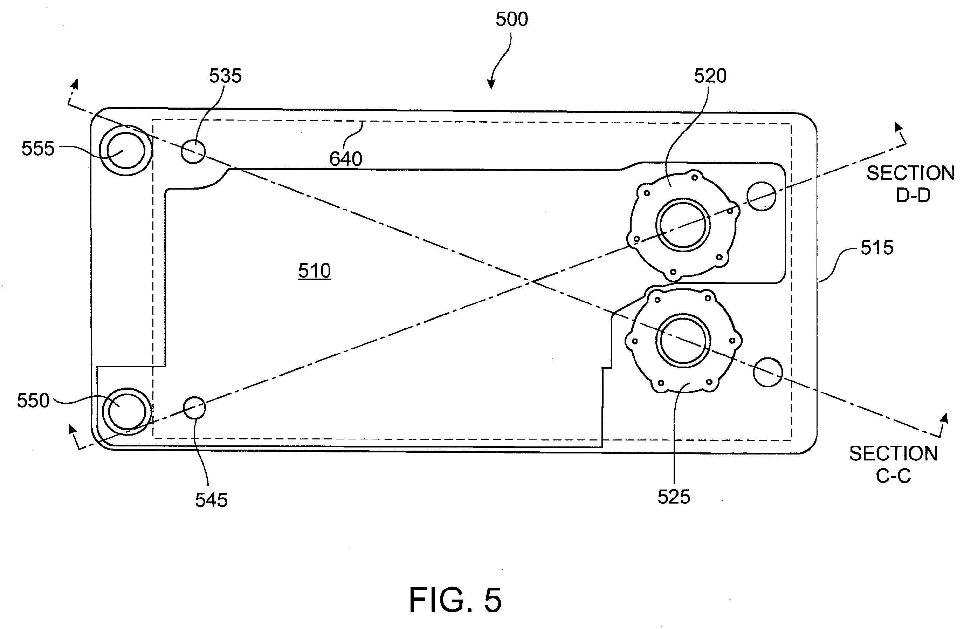

Referring to FIG. 5, a diagram illustrates a top view of a flowing electrolyte reservoir system 500 of a flowing electrolyte battery, including hidden detail, according to an alternative embodiment of the present invention. The system 500 includes a cell stack 640, an inner tank in the form of a bromine electrolyte tank 510, and an outer tank in the form of a zinc electrolyte tank 515. A bromine electrolyte pump 520 is positioned above the bromine electrolyte tank 510, and a zinc electrolyte pump 525 is positioned above the zinc electrolyte tank 515.

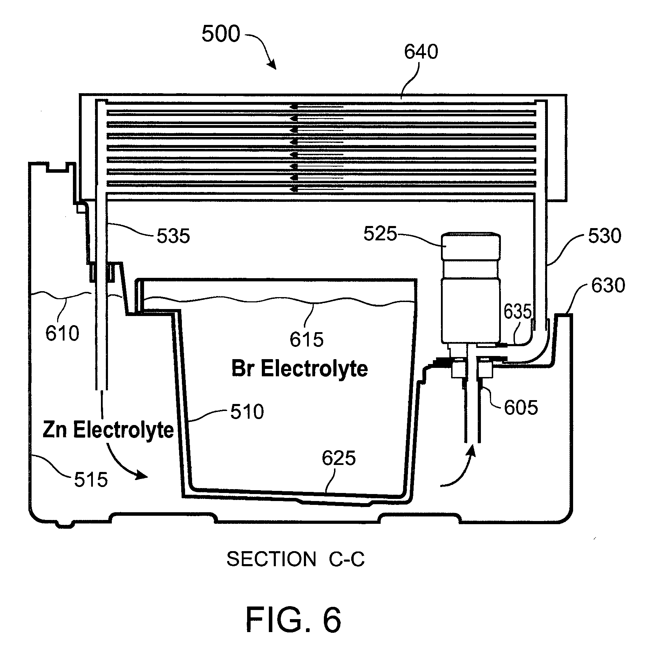

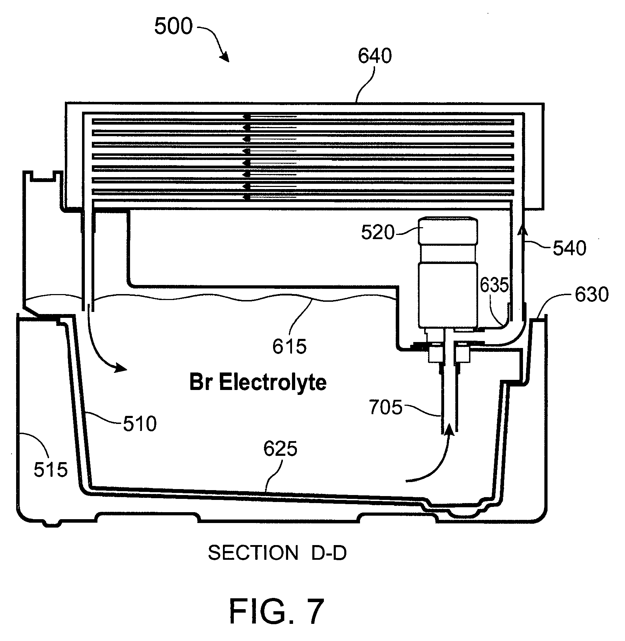

A zinc input port 530, shown in FIG. 6 positioned below the zinc electrolyte pump 525, enables zinc electrolyte to flow from the zinc electrolyte tank 515 to the cell stack, and a zinc output port 535 enables zinc electrolyte to flow from the cell stack to the zinc electrolyte tank 515. Similarly, a bromine input port 540, shown in FIG. 7 positioned below the bromine electrolyte pump 520, enables bromine electrolyte to flow from the bromine electrolyte tank 510 to the cell stack, and a bromine output port 545 enables bromine electrolyte to flow from the cell stack to the bromine electrolyte tank 510.

A bromine gas collection tube 550 extends from the bromine electrolyte tank 510. This enables bromine gas to be exhausted from the bromine electrolyte tank 510 if, for example due to abnormal operation, pressure builds up, advantageously through a pressure sensitive relief valve. Similarly, a zinc gas collection tube 555 extends from the zinc electrolyte tank 515. This enables zinc gas to be exhausted from the zinc electrolyte tank 515 if pressure builds up, advantageously through a pressure sensitive relief valve.

Referring to FIG. 6, a side cross-sectional view of the Section C-C of FIG. 5 illustrates a circulation path of zinc electrolyte in the flowing electrolyte reservoir system 500, according to an alternative embodiment of the present invention. As shown, zinc electrolyte enters an intake tube 605 and is then pumped by the zinc electrolyte pump 525 to the zinc input port 530. As shown by the arrows, the zinc electrolyte then flows through the cell stack 640 between various electrode plates, and out the zinc output port 535 to return to the zinc electrolyte tank 515.

Both the bromine electrolyte tank 510 and the zinc electrolyte tank 515 are complete and separable tanks. Further, a bottom surface 625 the bromine electrolyte tank 510 can be sloped relative to a bottom surface of the flowing electrolyte reservoir system 200 to improve collection and handling of the bromine complex.

Lines 610, 615 indicate liquid levels of the zinc electrolyte and the bromine electrolyte, respectively. As shown, the zinc electrolyte input port 530 and the zinc electrolyte output port 535 of the battery cell stack 640 are directly above the zinc electrolyte tank 515 and are not directly above the bromine electrolyte tank 510. That enables the zinc electrolyte to flow directly from the zinc electrolyte tank 515 to and from the battery cell stack 640 with only minimal "plumbing" apparatus such as hoses and fittings. Furthermore, any leaks in such plumbing are more likely to be self-contained and not result in cross contamination of electrolyte between the zinc electrolyte tank 515 and the bromine electrolyte tank 510.

Also, a raised lip 630 along edges of the zinc electrolyte tank 515 enables potential leaks from the bromine electrolyte tank 510, the cell stack 640, the pumps 520, 525, and other plumbing hoses 635 to be effectively collected and retained in the top of zinc electrolyte tank 515. That can eliminate the need for additional containment trays under both the bromine electrolyte tank 510 and the zinc electrolyte tank 515.

Referring to FIG. 7, a side cross-sectional view of the Section D-D of FIG. 5 illustrates a circulation path of bromine electrolyte in the flowing electrolyte reservoir system 500, according to an alternative embodiment of the present invention. As shown, bromine electrolyte enters an intake tube 705 and is then pumped by the bromine electrolyte pump 520 to the bromine input port 540. As shown by the arrows, the bromine electrolyte then flows through the cell stack 640 between various electrode plates, and out the bromine output port 545 to return to the bromine electrolyte tank 510.

Electrolyte generally flows transversely through the battery cell stack 640, such as zinc electrolyte entering at port 530 and exiting at port 535, and bromine electrolyte entering at port 540 and exiting at port 545. By locating the bromine electrolyte tank 510 diagonally with respect to the battery cell stack 640, the bromine electrolyte return via the port 545 coincides with the bromine electrolyte tank 510 directly below; similarly, the zinc electrolyte return via the port 535 coincides with the zinc electrolyte tank 515 directly below. Thus no additional plumbing is necessary to transfer electrolyte back from the battery cell stack 640 to either the bromine electrolyte tank 510 or to the zinc electrolyte tank 515.

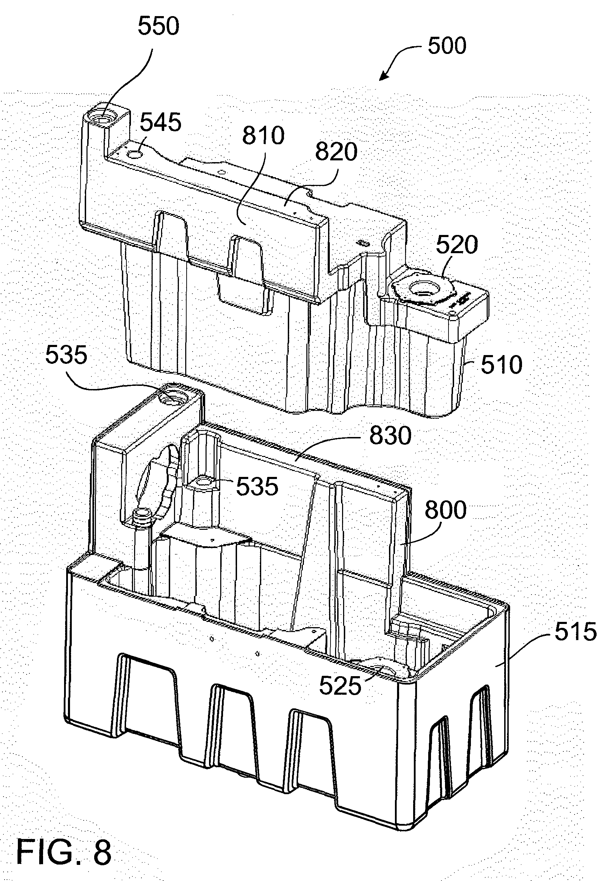

FIG. 8 is a front exploded perspective view of the flowing electrolyte reservoir system 500 of a flowing electrolyte battery, according to an alternative embodiment of the present invention.

The system 500 includes the bromine electrolyte tank 510, and the zinc electrolyte tank 515. The zinc electrolyte tank 515 and the bromine electrolyte tank 510 are complete, separable tanks, and are shaped such that the bromine electrolyte 510 tank fits into a void of the zinc electrolyte tank 515. A bromine electrolyte pump 520 is positioned above the bromine electrolyte tank 510, and a zinc electrolyte pump 525 is positioned above the zinc electrolyte tank 515.

An upper surface 820 of the bromine electrolyte tank 510 and an upper surface 830 of the zinc electrolyte tank 515 define surfaces on which the cell stack 640 rests. An upper part 810 of the bromine electrolyte tank 510 and an upper part 800 of the zinc electrolyte tank 515 form walls that, together with the cell stack 640, define a cavity for a cooling structure (not shown).

Electrolyte can be pumped through the cooling structure located in the cavity before being returned to the zinc electrolyte tank 515 or bromine electrolyte tank 510. A fan, for example mounted in a preformed cavity, can be used to force air from one end of the cavity to the other end, through the cooling structure, guided by the upper parts 800 and 810, the bromine electrolyte tank 510, the zinc electrolyte tank 515 and the battery cell stack 640. As will be understood by those having ordinary skill in the art, an example of a cooling structure is a series of long heat exchanger tubes having a large surface area with which the zinc and bromine electrolyte can exchange heat.

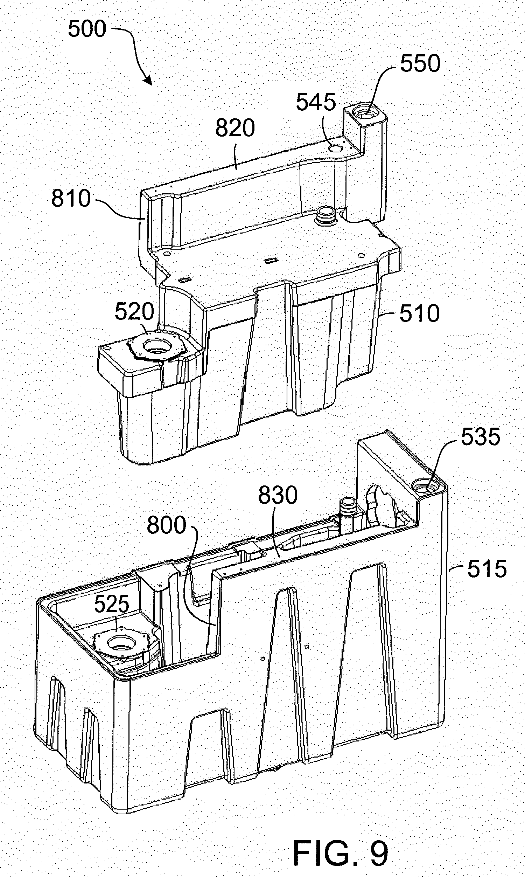

FIG. 9 is a rear exploded perspective view of the flowing electrolyte reservoir system 500 of a flowing electrolyte battery, according to an alternative embodiment of the present invention.

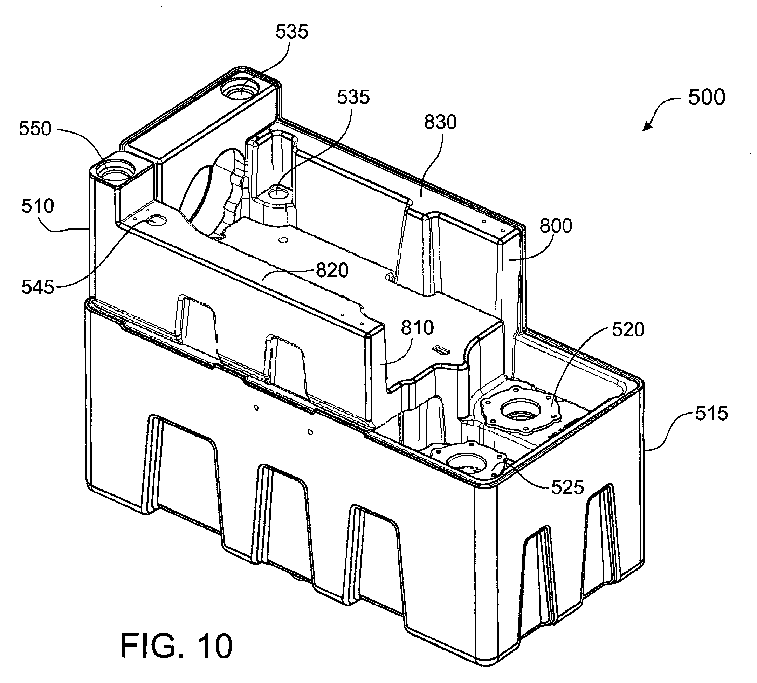

FIG. 10 is a front assembled perspective view of the flowing electrolyte reservoir system 500 of a flowing electrolyte battery, according to an alternative embodiment of the present invention.

In summary, advantages of some embodiments of the present invention include improved robustness, safety and efficiency, and reduced size and weight of flowing electrolyte battery systems. A reduced need for external plumbing hoses and fixtures both reduces the risk of electrolyte leaks and decreases the costs of the flowing electrolyte reservoir systems.

The above description of various embodiments of the present invention is provided for purposes of description to one of ordinary skill in the related art. It is not intended to be exhaustive or to limit the invention to a single disclosed embodiment. As mentioned above, numerous alternatives and variations to the present invention will be apparent to those skilled in the art of the above teaching. Accordingly, while some alternative embodiments have been discussed specifically, other embodiments will be apparent or relatively easily developed by those of ordinary skill in the art.

**Claims**

1. A flowing electrolyte reservoir system (500) for a flowing electrolyte battery comprising:

   a battery cell stack (640) comprising a negative electrolyte input port (530) and a negative electrolyte output port (535);
   an outer tank positioned beneath the battery cell stack; and
   an inner tank positioned inside the outer tank and beneath the battery cell stack;
   wherein the negative electrolyte input port (530) and the negative electrolyte output port (535) of the battery cell stack (640) are positioned directly above the outer tank and are not positioned directly above the inner tank.

2. A flowing electrolyte reservoir system according to claim 1 wherein the inner tank is transversely positioned between opposite corners of the outer tank and beneath opposite corners of the battery cell stack.

3. A flowing electrolyte reservoir system according to claim 1 wherein the system includes a first pump positioned on top of the outer tank and adjacent the battery cell stack and a second pump positioned on top of the inner tank and adjacent the battery cell stack.

4. A flowing electrolyte reservoir system according to claim 1 wherein the outer tank contains zinc electrolyte and the inner tank contains bromine electrolyte.

5. A flowing electrolyte reservoir system according to claim 1 wherein the outer tank and the inner tank are made of rotational moulded plastic.

6. A flowing electrolyte reservoir system according to claim 1 wherein the outer tank and the inner tank share a common lid.

7. A flowing electrolyte reservoir system according to claim 1 wherein the outer tank and the inner tank are complete, separable tanks and wherein the inner tank fits into a void of the outer tank.

8. A flowing electrolyte reservoir system according to claim 1 wherein a raised lip is integral to an edge of the outer tank.

9. A flowing electrolyte reservoir system according to claim 1 wherein a bottom surface of the inner tank is sloped toward an electrolyte collection region.

10. A flowing electrolyte reservoir system according to claim 1 wherein an upper part of the inner and outer tanks form walls of a cavity for a cooling structure.

11. A flowing electrolyte reservoir system according to claim 10 wherein the walls of a cavity for a cooling structure include a hole for mounting a cooling fan.

**Patentansprüche**

1. Flusselektrolytreservoirsystem (500) für eine Flusselektrolytbatterie, beinhaltend:

   einen Batteriezellenstapel (640), beinhaltend einen negativen Elektrolyteingangsport (530) und einen negativen Elektrolytausgangsport (535);
   einen Außentank, der unter dem Batteriezellenstapel positioniert ist; und
   einen Innentank, der innerhalb des Außentanks unter dem Batteriezellenstapel positioniert ist;
   wobei der negative Elektrolyteingangsport (530) und der negative Elektrolytausgangsport (535) des Batteriezellenstapels (640) direkt über dem Außentank positioniert sind und nicht direkt über dem Innentank positioniert sind.

2. Flusselektrolytreservoirsystem gemäß Anspruch 1, wobei der Innentank quer zwischen entgegengesetzten Ecken des Außentanks und unter entgegengesetzten Ecken des Batteriezellenstapels positioniert ist.

3. Flusselektrolytreservoirsystem gemäß Anspruch 1, wobei das System eine erste Pumpe, die auf dem Außentank und neben dem Batteriezellenstapel positioniert ist, und eine zweite Pumpe, die auf dem Innentank und neben dem Batteriezellenstapel positioniert ist, umfasst.

4. Flusselektrolytreservoirsystem gemäß Anspruch 1, wobei der Außentank Zinkelektrolyt enthält und der Innentank Bromelektrolyt enthält.

5. Flusselektrolytreservoirsystem gemäß Anspruch 1, wobei der Außentank und der Innentank aus rotationsgeformtem Kunststoff gefertigt sind.

6. Flusselektrolytreservoirsystem gemäß Anspruch 1, wobei sich der Außentank und der Innentank einen gemeinsamen Deckel teilen.

7. Flusselektrolytreservoirsystem gemäß Anspruch 1, wobei der Außentank und der Innentank vollständige, trennbare Tanks sind und wobei der Innentank in einen Zwischenraum des Außentanks hineinpasst.

8. Flusselektrolytreservoirsystem gemäß Anspruch 1, wobei eine erhöhte Lippe integral mit einer Kante des Außentanks ist.

9. Flusselektrolytreservoirsystem gemäß Anspruch 1, wobei eine untere Fläche des Innentanks zu einer Elektrolytsammelregion hin geneigt ist.

10. Flusselektrolytreservoirsystem gemäß Anspruch 1, wobei ein oberer Teil des Innen- und Außentanks Wände eines Hohlraums für eine Kühlstruktur bildet.

11. Flusselektrolytreservoirsystem gemäß Anspruch 10, wobei die Wände eines Hohlraums für eine Kühlstruktur ein Loch zum Montieren eines Kühlgebläses umfassen.

**Revendications**

1. Système de réservoir d'électrolyte fluide (500) pour une batterie à électrolyte fluide comprenant :

   une pile d'éléments de batterie (640) comprenant un orifice d'entrée d'électrolyte négative (530) et un orifice de sortie d'électrolyte négative (535) ;
   une cuve extérieure positionnée en dessous de la pile d'éléments de batterie ; et
   une cuve intérieure positionnée à l'intérieur de la cuve extérieure et en dessous de la pile d'éléments de batterie ;
   dans lequel l'orifice d'entrée d'électrolyte négative (530) et l'orifice de sortie d'électrolyte négative (535) de la pile d'éléments de batterie (640) sont positionnés juste au-dessus de la cuve extérieure et ne sont pas positionnés juste au-dessus de la cuve intérieure.

2. Système de réservoir d'électrolyte fluide selon la revendication 1, dans lequel la cuve intérieure est positionnée transversalement entre des coins opposés de la cuve extérieure et en dessous de coins opposés de la pile d'éléments de batterie.

3. Système de réservoir d'électrolyte selon la revendication 1, ce système comprenant une première pompe positionnée au-dessus de la cuve extérieure et adjacente à la pile d'éléments de batterie et une deuxième pompe positionnée au-dessus de la cuve intérieure et adjacente à la pile d'éléments de batterie.

4. Système de réservoir d'électrolyte fluide selon la revendication 1, dans lequel la cuve extérieure contient un électrolyte au zinc et la cuve intérieure contient un électrolyte au brome.

5. Système de réservoir d'électrolyte fluide selon la revendication 1, dans lequel la cuve extérieure et la cuve intérieure sont faites en plastique moulé par rotation.

6. Système de réservoir d'électrolyte fluide selon la revendication 1, dans lequel la cuve extérieure et la cuve intérieure partagent un couvercle commun.

7. Système de réservoir d'électrolyte fluide selon la revendication 1, dans lequel la cuve extérieure et la cuve intérieure sont des cuves complètes et séparables, et dans lequel la cuve intérieure s'adapte dans le vide de la cuve extérieure.

8. Système de réservoir d'électrolyte fluide selon la revendication 1, dans lequel une lèvre surélevée est solidaire d'un bord de la cuve extérieure.

9. Système de réservoir d'électrolyte fluide selon la revendication 1, dans lequel une surface inférieure de la cuve intérieure est inclinée vers une région de collecte d'électrolyte.

10. Système de réservoir d'électrolyte fluide selon la revendication 1, dans lequel une partie supérieure des cuves extérieure et intérieure forme les parois d'une cavité pour une structure de refroidissement.

11. Système de réservoir d'électrolyte fluide selon la revendication 10, dans lequel les parois d'une cavité pour une structure de refroidissement comprennent un trou pour monter un ventilateur de refroidissement.

FIG. 1
(Prior Art)

EP 2 510 568 B1

FIG. 2

EP 2 510 568 B1

FIG. 3

**FIG. 4**

EP 2 510 568 B1

FIG. 5

EP 2 510 568 B1

SECTION C-C

FIG. 6

EP 2 510 568 B1

SECTION D-D

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4418128 A, Fujii Toshinobu
- US 4400448 A, Einstein Harry
- JP 63016573 A, Agency of Ind Science & Technol